(19) Europäisches Patentamt / European Patent Office / Office européen des brevets

(11) **EP 4 153 886 B1**

(12) **FASCICULE DE BREVET EUROPEEN**

(45) Date de publication et mention
de la délivrance du brevet:
**30.04.2025 Bulletin 2025/18**

(21) Numéro de dépôt: **21732477.1**

(22) Date de dépôt: **18.05.2021**

(51) Classification Internationale des Brevets (IPC):
***F16H 1/32*** *(2006.01)*

(52) Classification Coopérative des Brevets (CPC):
**F16H 1/321;** F16H 2001/324; F16H 2001/325;
H02K 7/116

(86) Numéro de dépôt international:
**PCT/FR2021/050866**

(87) Numéro de publication internationale:
**WO 2021/234273 (25.11.2021 Gazette 2021/47)**

(54) **DISPOSITIF D'ENROULEMENT/DÉROULEMENT D'UN LIEN**

VORRICHTUNG ZUM AUF- UND ABWICKELN EINES BANDES

DEVICE FOR WINDING/UNWINDING A LINK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.05.2020 FR 2005123**

(43) Date de publication de la demande:
**29.03.2023 Bulletin 2023/13**

(73) Titulaire: **Conductix Wampfler France
01300 Belley (FR)**

(72) Inventeurs:
- **BERGER, Jean-Michel
01300 BRENS (FR)**
- **PARSEIHIAN, Bruno
01300 MAGNIEU (FR)**
- **FOURNIER, Yohan
38510 Arandon-Passins (FR)**

(74) Mandataire: **Regimbeau
20, rue de Chazelles
75847 Paris Cedex 17 (FR)**

(56) Documents cités:
DE-A1- 10 350 040      DE-U1- 202017 006 777
JP-A- 2006 300 273

## Description

## DOMAINE DE L'INVENTION

La présente invention concerne le domaine des dispositifs d'enroulement et/ou de déroulement de liens.

## ETAT DE LA TECHNIQUE

Des dispositifs d'enroulement et/ou de déroulement de lien sont utilisés dans de nombreuses applications industrielles. En particulier, un lien peut devoir être déployé entre deux éléments présentant une position relative l'un par rapport à l'autre, cette position relative étant amenée à évoluer au cours du temps.

Par exemple, le premier élément peut être un support fixé au sol, un bâti d'un robot, etc., et le second élément peut être un chariot ou un portique roulant au sol, un bras d'un robot, etc. Le deuxième élément est susceptible de se déplacer par rapport au premier élément d'une distance de l'ordre d'une dizaine de mètres à plus d'un kilomètre.

Le lien est adapté pour transférer un fluide, de l'énergie et/ou des signaux entre les deux éléments. Le lien peut ainsi être un câble électrique, un tuyau à air ou à fluide, une fibre optique ou un faisceau de fibres optiques, etc. Le lien est enroulé sur un support d'enroulement, tel qu'une bobine d'enroulement.

Un dispositif d'enroulement/déroulement, monté sur le premier ou le deuxième élément, est adapté pour enrouler et/ou dérouler le lien sur une bobine. Le lien s'étend ainsi entre la bobine, situé en un premier côté du dispositif d'enroulement/déroulement, et un joint tournant, à l'opposé du premier côté par rapport au dispositif.

Le dispositif d'enroulement/déroulement de lien peut être motorisé, et enrouler et/ou dérouler le lien de manière synchronisée avec le déplacement du second élément. Ainsi, le dispositif enroule le lien sur la bobine lorsque le deuxième élément se rapproche du premier élément afin de réduire d'autant sa longueur, et déroule plus de longueur de lien lorsque le deuxième élément s'éloigne du premier élément.

Le document FR 2 335 754 décrit un dispositif d'enroulement/déroulement de lien comprenant un réducteur à couple conique. Le réducteur comprend plusieurs pignons coniques, chacun étant lié à un groupe moto-coupleur, et engrenant sur une même roue conique. De tels dispositifs permettent de monter plusieurs groupes moto-coupleurs sur un réducteur couple conique commun. Ainsi, le couple peut être adapté en fonction de l'application envisagée, et les groupes moto-coupleurs peuvent être produits en plus grand nombre, ce qui tend à réduire le coût de production.

Néanmoins, les réducteurs à couple conique manquent de compacité lorsqu'une réduction importante est recherchée. Par ailleurs, ils ne peuvent encaisser de manière satisfaisante des à-coups brefs et/ou importants. En effet, seul un faible nombre de dents des éléments du réducteur sont en contact les unes avec les autres.

D'autres dispositifs d'enroulement/déroulement de lien connus comprennent un moteur asynchrone en liaison directe avec la bobine, à travers un réducteur. Néanmoins, un moteur asynchrone offre seulement une faible précision de contrôle de couple. Il peut exister des écarts d'environ 15% entre le couple consigne et le couple effectivement fourni à l'arbre de sortie par le moteur asynchrone. En effet, dans un moteur asynchrone, le rotor ne tourne pas à la même vitesse que le champ magnétique. Cela entraîne des glissements, et une magnétisation du rotor par le courant moteur, donc une perte de vitesse de la rotation en sortie du moteur et des imprécisions sur la relation courant/couple. Par conséquent, une partie du courant mis dans le moteur asynchrone est perdu et n'est pas utilisé pour générer le couple. L'écart entre le couple consigne et le couple effectivement fourni à l'arbre de sortie est donc important, ce qui complexifie le pilotage du dispositif d'enroulement/déroulement. Le moteur asynchrone n'est donc pas entièrement satisfaisant lorsqu'une grande précision de contrôle de couple est requise.

De plus, un moteur asynchrone ne permet pas des surcouples sur des périodes courtes et à des valeurs aussi élevées qu'un moteur synchrone. Cela peut poser des problèmes pour gérer les phases d'arrêt d'urgence, ou les phases qui nécessitent de freiner la bobine et de la relancer en sens inverse en un temps très court, ce qui est le cas lorsque l'enrouleur doit passer au-dessus de son point d'alimentation.

Enfin, ces dispositifs d'enroulement/déroulement à moteur asynchrone ne permettent pas une modularité satisfaisante. En effet, ces dispositifs nécessitent une régulation électronique car ils sont pilotés par un variateur de fréquence et un programme de contrôle qui module la consigne de couple en fonction de la phase de fonctionnement du dispositif. Or, le pilotage de plusieurs moteurs asynchrones avec un seul variateur de fréquence conduirait à de mauvais résultats en termes de couple obtenu par rapport à la consigne. Par conséquent, de tels dispositifs d'enroulement/déroulement à régulation électronique et à moteur asynchrone ne peuvent pas comprendre plusieurs moteurs asynchrones lorsqu'une bonne précision sur le contrôle du couple est nécessaire.

La puissance du moteur asynchrone doit donc être modifiée à chaque application, pour être adaptée aux besoins du client. Le dimensionnement du moteur asynchrone entraînant le dispositif est donc complexe à adapter à une grande diversité d'applications, notamment à différents types de lien, hauteurs d'installation, vitesses et accélérations du dispositif d'enroulement/déroulement, etc. Le couple ne peut pas toujours être adapté en fonction du besoin spécifique à l'application, et le nombre de pièces communes de ces dispositifs d'enroulement/déroulement de lien est limité, ce qui augmente le coût du dispositif. Par ailleurs, il est souvent nécessaire d'acheter un moteur spécifique à une application donnée, ce qui augmente encore les coûts et diminue le nombre d'applications accessibles.

Les documents FR 2 607 333 A1 et FR 2 899 399 A1 décrivent des dispositifs d'enroulement/déroulement de lien comprenant un coupleur magnétique à hystérésis. Ces dispositifs ne nécessitent pas de régulation électronique et peuvent être modulaires. En effet, la régulation est effectuée par les coupleurs magnétiques qui adaptent leur vitesse à la vitesse de la bobine, fournissant un couple pur et donc une traction à peu près constante sur le lien.

Néanmoins, les dispositifs d'enroulement/déroulement à coupleurs magnétiques présentent un moins bon rendement complet, et ne permettent pas de gérer des phénomènes transitoires tels que les arrêts d'urgence ou le passage de point d'alimentation. Par ailleurs, ces dispositifs ne sont pas performants une fois une certaine puissance dépassée, car il est difficile d'assembler de trop nombreux coupleurs sur un même réducteur, les dimensions de celui-ci devenant très grandes, et il est coûteux d'augmenter la taille des coupleurs.

Le document JP 2006/300273 décrit un dispositif comprenant un moteur associé à un réducteur. Le dispositif comprend un arbre d'entrée mobile en rotation autour d'un axe longitudinal et un arbre de sortie creux traversant qui entraîne une vis selon un mouvement linéaire. Le dispositif comprend en outre un moteur synchrone à aimants permanents, l'arbre d'entrée étant constitué par une partie du rotor du moteur synchrone, et comprend également un réducteur cycloïdal comprenant une came située entre le disque cycloïdal et la couronne.

Le document DE10350040 décrit un dispositif comprenant un moteur associé à un réducteur.

**EXPOSE DE L'INVENTION**

Un but de l'invention est de proposer un dispositif d'enroulement/déroulement d'un lien compact et présentant une large gamme de réduction.

Un autre but de l'invention est de proposer un dispositif d'enroulement/déroulement d'un lien avec une bonne précision de contrôle de couple et permettant des surcouples élevés sur des périodes courtes.

Un autre but de l'invention est de proposer un dispositif d'enroulement/déroulement d'un lien modulaire, de sorte à adapter le couple à l'utilisation souhaitée tout en maintenant des coûts de production faibles.

Un autre but de l'invention est de proposer un dispositif d'enroulement/déroulement d'un lien qui permette de protéger le lien à enrouler/dérouler.

Selon un premier aspect, l'invention concerne un dispositif d'enroulement/déroulement d'un lien, comprenant :

- un arbre d'entrée mobile en rotation autour d'un axe longitudinal,
- un arbre de sortie sensiblement coaxial à l'arbre d'entrée, adapté pour le montage d'un joint tournant solidaire en rotation de l'arbre de sortie, l'arbre de sortie étant un arbre creux traversant agencé pour le passage du lien entre une bobine et le joint tournant, l'arbre de sortie étant adapté pour entraîner la bobine en rotation autour de l'axe longitudinal,
- au moins un moteur synchrone à aimants permanents comprenant un rotor agencé autour d'une première partie de l'arbre de sortie, le rotor étant solidaire en rotation de l'arbre d'entrée,
- un réducteur cycloïdal agencé autour d'une seconde partie de l'arbre de sortie, le réducteur cycloïdal comprenant au moins une came interne, une couronne externe et au moins un disque cycloïdal disposé entre chaque came et la couronne, dans lequel chaque came est montée solidaire en rotation de l'arbre d'entrée, l'au moins un disque cycloïdal est monté solidaire en rotation de chaque came, et dans lequel chaque came est excentrique, de sorte qu'une rotation de chaque came autour de l'axe longitudinal entraîne une rotation de l'au moins un disque cycloïdal selon un mouvement excentrique et cycloïdal, et
- un organe de transmission adapté pour transmettre un déplacement angulaire de l'au moins un disque cycloïdal à l'arbre de sortie, de sorte qu'une rotation excentrique et cycloïdale de l'au moins un disque cycloïdal entraîne une rotation autour de l'axe longitudinal de l'arbre de sortie.

Certaines caractéristiques préférées mais non limitatives du dispositif d'enroulement/déroulement décrit ci-dessus sont les suivantes, prises en combinaison ainsi que défini dans les revendications dépendantes :

- l'arbre d'entrée est agencé autour d'au moins une partie de l'arbre de sortie ;
- le dispositif d'enroulement/déroulement comprend en outre un carter dans lequel sont disposés l'au moins un moteur synchrone et le réducteur cycloïdal, l'arbre de sortie traversant le carter d'une extrémité à une autre du carter ;
- le dispositif d'enroulement/déroulement comprend entre un et quatre moteurs synchrones montés en série le long de la première partie de l'arbre de sortie ;
- l'au moins un moteur synchrone est un moteur synchrone à aimants permanents à flux axial ;
- l'au moins une came et l'arbre d'entrée sont formés d'une seule pièce, chaque came comprenant une face externe présentant une dimension radiale qui varie en fonction de la position angulaire autour de l'axe longitudinal, lorsque chaque came est montée dans le dispositif d'enroulement/déroulement ;

- l'au moins un disque cycloïdal est une roue cycloïdale ;

- l'organe de transmission comprend une première partie et une deuxième partie sensiblement radiale adaptée pour raccorder la première partie avec l'arbre de sortie, l'organe de transmission étant agencé de sorte qu'une rotation excentrique et cycloïdale de l'au moins un disque cycloïdal entraîne une rotation autour de l'axe longitudinal de la première partie de l'organe de transmission ;

- l'au moins un disque cycloïdal comprend au moins un alésage longitudinal, et la première partie de l'organe de transmission forme au moins un doigt longitudinal adapté pour s'étendre dans l'au moins un alésage longitudinal de l'au moins un disque cycloïdal, de sorte à transmettre le déplacement angulaire de l'au moins un disque cycloïdal à la première partie de l'organe de transmission ;

- le réducteur cycloïdal comprend deux disques cycloïdaux sensiblement identiques et montés en série le long de l'axe longitudinal, les deux disques cycloïdaux étant placés en excentricité opposée dans le réducteur cycloïdal, dans lequel chaque disque cycloïdal comprend au moins un alésage longitudinal, les alésages longitudinaux des deux disques cycloïdaux étant agencées en vis-à-vis l'un de l'autre de sorte à former au moins une paire d'alésages longitudinaux lorsque les disques cycloïdaux sont montés dans le dispositif d'enroulement/déroulement, l'au moins un doigt de l'organe de transmission s'étendant dans l'au moins une paire d'alésages longitudinaux des deux disques cycloïdaux ;

- le dispositif d'enroulement/déroulement comprend un premier disque cycloïdal et un deuxième disque cycloïdal, le premier disque cycloïdal étant monté solidaire en rotation de l'au moins une came, le deuxième disque cycloïdal étant monté solidaire en rotation du premier disque cycloïdal, dans lequel la première partie de l'organe de transmission comprend une denture interne disposée à l'extérieur du deuxième disque cycloïdal et adaptée pour coopérer avec une denture cycloïdale externe du deuxième disque cycloïdal de sorte qu'une rotation excentrique du deuxième disque cycloïdal entraîne une rotation autour de l'axe longitudinal de la première partie de l'organe de transmission ;

- la première partie de l'organe de transmission comprend un bâti rigide et un ensemble d'axes sensiblement cylindriques, le bâti rigide comprenant un ensemble d'alésages sensiblement cylindriques circonférentiellement répartis autour de l'axe longitudinal, dans lequel chaque axe de l'ensemble d'axes est inséré dans un alésage respectif de l'ensemble d'alésages du bâti de la première partie de l'organe de transmission, de sorte à former la denture interne de la première partie de l'organe de transmission.

Selon un deuxième aspect, l'invention concerne un enrouleur d'un lien, l'enrouleur comprenant une bobine, un dispositif d'enroulement/déroulement selon le premier aspect, un joint tournant, et un dispositif de contrôle, dans lequel le dispositif de contrôle est adapté pour contrôler une consigne et/ou piloter le moteur synchrone, de sorte que le dispositif de contrôle et le dispositif d'enroulement/déroulement fournissent un couple d'enroulement/déroulement adapté.

## DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :

La figure 1 représente une vue de côté schématique d'un dispositif d'enroulement/déroulement selon un mode de réalisation de l'invention.

Les figures 2a et 2b représentent des vues en perspective schématiques en coupe partielle d'un dispositif d'enroulement/déroulement selon un mode de réalisation de l'invention.

La figure 3 représente une vue de côté schématique d'un dispositif d'enroulement/déroulement selon un mode de réalisation de l'invention.

La figure 4 représente une vue de côté schématique d'un dispositif d'enroulement/déroulement selon un mode de réalisation de l'invention.

Les figures 5a et 5b représentent des vues en perspective schématiques en coupe partielle d'un dispositif d'enroulement/déroulement selon un mode de réalisation de l'invention.

## DESCRIPTION DETAILLEE DE L'INVENTION

Un dispositif d'enroulement/déroulement d'un lien comprend :

- un arbre d'entrée 10 mobile en rotation autour d'un axe longitudinal L,
- un arbre de sortie 20 sensiblement coaxial à l'arbre d'entrée 10, l'arbre de sortie 20 étant un arbre creux traversant agencé pour le passage du lien entre une bobine et un joint tournant, l'arbre de sortie 20 étant adapté pour entraîner la bobine en rotation autour de l'axe longitudinal L.

Dans la suite de la demande, on appelle axe longitudinal L, l'axe autour duquel sont disposés l'arbre d'entrée 10 et l'arbre de sortie 20. Une direction radiale est une direction perpendiculaire à l'axe longitudinal L et passant par lui. Un élément longitudinal est un élément qui s'étend principalement dans la direction de l'axe longitudinal L. Un élément radial est un élément qui s'étend principalement dans la direction de la direction radiale.

Les termes interne et externe, respectivement, sont utilisés en référence à la direction radiale de sorte que la partie ou la face interne d'un élément est plus proche de l'axe longitudinal L que la partie ou la face externe du même élément.

Les termes amont et aval, respectivement, sont utilisés en référence à une position sur l'axe longitudinal L. Le joint tournant est placé en amont du dispositif d'enroulement/déroulement, et la bobine est placée en aval du dispositif d'enroulement/déroulement.

Le terme lien est utilisé pour désigner différents liens tels que des câbles électriques, des câbles de données, des tuyaux à air ou à fluide, etc.

Le lien est destiné à être disposé entre la bobine et le joint tournant, et à être enroulé et/ou déroulé autour de la bobine. Le joint tournant permet de faire le lien entre la bobine, qui est entraînée en rotation par l'arbre de sortie 20, et l'environnement du dispositif d'enroulement/déroulement, qui ne tourne pas autour de l'axe longitudinal L. Le joint tournant est monté sur l'arbre de sortie 20 et solidaire de l'arbre de sortie 20 en rotation autour de l'axe longitudinal de sorte que le joint tournant est entrainé par l'arbre de sortie 20 à la même vitesse de rotation que l'arbre de sortie 20.

Par exemple, dans le cas de la transmission d'une puissance électrique par le biais du lien, le joint tournant peut consister en un système de bagues faites dans un alliage présentant une bonne conductivité sur lesquelles frottent des balais frittés à forte teneur en matériau conducteur, ce qui permet d'assurer la continuité. Le lien venant de la bobine est connecté aux bagues. Un lien venant de la partie fixe est connecté aux balais.

Une rotation de la bobine dans un premier sens entraîne un enroulement du lien autour de la bobine et une rotation de la bobine dans un deuxième sens opposé au premier sens entraîne un déroulement du lien. Le dispositif d'enroulement/déroulement peut fonctionner dans le premier sens de rotation et dans le deuxième sens de rotation. Ainsi, la longueur de lien peut être ajustée, par le biais de la rotation de la bobine.

Le dispositif d'enroulement/déroulement permet de protéger le lien, par le biais de l'arbre creux. En effet, le lien peut ainsi s'étendre entre la bobine, situé en un premier côté du dispositif d'enroulement/déroulement, et un joint tournant, situé en un deuxième côté, opposé au premier côté, du dispositif, dans l'arbre creux du dispositif. Le lien est ainsi protégé de potentielles dégradations, par exemple dues aux conditions climatiques, à environnement extérieur contraignant, à l'érosion par contact avec l'extérieur, ou à des chocs et frottements avec des éléments extérieurs. Le dispositif d'enroulement/déroulement permet également de protéger le lien des organes internes du dispositif d'enroulement/déroulement, car le lien est confiné dans l'arbre de sortie 20, qui tourne à la même vitesse que lui.

Le dispositif d'enroulement/déroulement d'un lien comprend également :

- au moins un moteur synchrone 30 à aimants permanents comprenant un rotor 31 agencé autour d'une première partie de l'arbre de sortie 20, le rotor 31 étant solidaire en rotation de l'arbre d'entrée 10,
- un réducteur cycloïdal 50 agencé autour d'une seconde partie de l'arbre de sortie 20, le réducteur cycloïdal 50 comprenant au moins une came 51 interne, une couronne 53 externe et au moins un disque cycloïdal 52 disposé entre chaque came 51 et la couronne 53, dans lequel chaque came 51 est montée solidaire en rotation de l'arbre d'entrée 10, le disque cycloïdal 52 est monté solidaire en rotation de chaque came 51, et dans lequel chaque came 51 est excentrique, de sorte qu'une rotation de chaque came 51 autour de l'axe longitudinal L entraîne une rotation de l'au moins un disque cycloïdal 52 selon un mouvement excentrique et cycloïdal, et
- un organe de transmission 60 adapté pour transmettre un déplacement angulaire de l'au moins un disque cycloïdal 52 à l'arbre de sortie 20, de sorte qu'une rotation excentrique et cycloïdale de l'au moins un disque cycloïdal 52 entraîne une rotation autour de l'axe longitudinal L de l'arbre de sortie 20.

Le terme réducteur désigne un mécanisme destiné à réduire la vitesse et augmenter le couple, l'arbre de sortie 20 tournant alors à une vitesse moindre de celle de l'arbre d'entrée 10. En variante, le terme réducteur peut désigner tout mécanisme destiné à modifier la vitesse et le couple de l'arbre de sortie 20 par rapport à l'arbre d'entrée 10.

Le réducteur cycloïdal 50 permet ainsi de modifier la vitesse de l'arbre de sortie 20 par rapport à la vitesse de l'arbre moteur, d'un certain rapport appelé rapport de réduction. Le dispositif d'enroulement et/ou déroulement du lien transmet ainsi une rotation de l'arbre d'entrée 10 à l'arbre de sortie 20. Le dispositif d'enroulement/déroulement permet donc d'entraîner la bobine en rotation, en réponse à une rotation du rotor 31 du ou des moteurs synchrones 30, et ainsi d'enrouler/dérouler le lien.

Le terme cycloïdal est utilisé pour désigner un profil correspondant sensiblement à une cycloïde, c'est-à-dire à une trajectoire d'un point fixé à un cercle qui roule sans glisser sur une génératrice. Les profils décrits peuvent s'écarter du profil cycloïdal purement théorique. Typiquement, le disque cycloïdal 52 peut présenter une surface externe cycloïdale.

Un réducteur cycloïdal 50 permet d'aboutir à un rapport de réduction important, par exemple jusqu'à environ 1/120, par exemple de 20, 40 ou 90, de manière compacte. Le réducteur cycloïdal 50 présente des probabilités de défaillance faibles, un jeu de fonctionnement faible, et un rendement élevé, par rapport à d'autres réducteurs tels que les réducteurs à couple conique classiques. Le réducteur cycloïdal 50 présente un rapport de conduite plus important, donc un nombre de dents en contact plus important, qu'un réducteur à couple conique classique. Le réducteur cycloïdal 50 peut par conséquent encaisser davantage d'à-coups brefs et conséquents.

Un moteur synchrone 30 à aimants permanents (ou moteur synchrone 30) conduit à une précision de contrôle de couple améliorée par rapport à un moteur asynchrone. En effet, le champ étant créé par les aimants permanents, un moteur synchrone n'entraîne pas de glissements ni de magnétisation du rotor 31 par le courant moteur. Par conséquent, la quasi-totalité du courant mis dans le moteur synchrone 30 à aimants permanents est utilisé pour générer le couple. L'écart entre le couple consigne et le couple effectivement fourni à l'arbre de sortie 20 est donc réduit. Le couple mécanique est ainsi l'image directe du courant, ce qui facilite le pilotage du dispositif d'enroulement/déroulement et le rend plus précis.

De plus, un moteur synchrone 30 permet des surcouples sur des périodes courtes et à des valeurs plus élevées qu'un moteur asynchrone. Les phases d'arrêt d'urgence sont donc mieux gérées. Il en est de même pour les phases qui nécessitent de freiner la bobine et de la relancer en sens inverse en un temps très court, ce qui est le cas lorsque l'enrouleur doit passer au-dessus de son point d'alimentation. Ainsi, l'utilisation d'un moteur synchrone permet de limiter la puissance du moteur pour une même application.

Enfin, le dispositif d'enroulement/déroulement de lien permet une grande modularité. En effet, plusieurs moteurs synchrones 30 peuvent être pilotés par un même variateur de fréquence de sorte à effectuer la régulation électronique du dispositif d'enroulement/déroulement. Par conséquent, le nombre de moteurs synchrones 30 du dispositif d'enroulement/déroulement peut être adapté. Le dimensionnement du moteur entraînant le dispositif peut donc être adapté facilement à une grande diversité d'applications, notamment à différents types de lien, hauteurs d'installation, vitesses et accélérations du dispositif d'enroulement/déroulement, etc. Par conséquent, le nombre de pièces communes du dispositif d'enroulement/déroulement de lien est important, ce qui en diminue le coût.

Par exemple, plusieurs moteurs synchrones 30 identiques ou quasi-identiques peuvent être montés en série le long de l'arbre de sortie 20. Ainsi, le couple peut être adapté au plus juste besoin du client. Par ailleurs, un plus grand nombre de moteurs synchrones 30 à aimants permanents identiques est ainsi produit, ce qui permet d'en diminuer les coûts.

Le moteur synchrone 30 est disposé en amont du réducteur cycloïdal 50. L'arbre d'entrée 10 et l'arbre de sortie 20 s'étendent sensiblement le long de l'axe longitudinal L. Le dispositif d'enroulement/déroulement peut présenter une symétrie radiale autour de l'axe longitudinal L.

L'arbre d'entrée 10 est un arbre creux, et peut correspondre à un arbre moteur pour le dispositif d'enroulement/déroulement. L'arbre d'entrée 10 peut être agencé autour d'au moins une partie de l'arbre de sortie 20, l'arbre d'entrée 10 étant en une position plus externe que l'arbre de sortie 20. Des paliers à roulement peuvent être disposés entre l'arbre d'entrée 10 et l'arbre de sortie 20, pour autoriser une rotation de l'arbre d'entrée 10 à une vitesse différente de celle de l'arbre de sortie 20.

L'arbre d'entrée 10 peut s'étendre au niveau du moteur synchrone 30, et jusqu'au réducteur cycloïdal 50, en particulier jusqu'à l'au moins une came 51 du réducteur cycloïdal 50. L'arbre d'entrée 10 peut présenter une première extrémité adaptée pour s'étendre du côté du joint tournant, et une deuxième extrémité opposée à la première extrémité.

L'arbre d'entrée 10 reçoit la puissance motrice à transmettre du ou des moteurs synchrones 30, le ou les moteurs synchrones créant la puissance mécanique à transmettre via leur rotor 31. La deuxième extrémité de l'arbre d'entrée 10 peut être prolongée radialement par l'au moins une came 51, au niveau du réducteur cycloïdal 50. Une came 51 peut être située autour de la deuxième extrémité de l'arbre d'entrée 10, la came 51 étant située en une position plus externe que l'arbre d'entrée 10. Des paliers peuvent être disposés entre l'arbre d'entrée 10 et l'arbre de sortie 20 au niveau de la came 51.

L'au moins une came 51 et l'arbre d'entrée 10 peuvent être formés d'une seule pièce. En variante, la came 51 peut être rapportée et fixée sur l'arbre d'entrée 10 au niveau de sa deuxième extrémité.

L'arbre d'entrée 10 peut présenter des moyens d'entraînement du rotor 31 du moteur synchrone 30 disposés au niveau du moteur synchrone 30. Par exemple, des cannelures complémentaires de l'arbre d'entrée 10 et du rotor 31 peuvent permettre de solidariser l'arbre d'entrée 10 et le rotor 31 du moteur synchrone 30 en rotation l'un par rapport à l'autre.

Lors de l'enroulement du lien, la rotation du rotor 31 est transmise à l'arbre d'entrée 10, le rotor 31 entraînant l'arbre d'entrée 10 en rotation autour de l'axe longitudinal L. Le ou les moteurs synchrones 30 sont alors moteurs et entrainent la bobine en rotation.

A l'inverse, lors du déroulement du lien, la rotation de l'arbre d'entrée 10 autour de l'axe longitudinal L est transmise au rotor 31 du ou des moteurs synchrones 30 par les moyens d'entrainement du rotor 31. Le ou les moteurs synchrones 30 sont alors des générateurs et freinent le déroulement de la bobine, empêchant l'emballement de la bobine.

L'arbre de sortie 20 est un arbre creux traversant. L'arbre de sortie 20 peut s'étendre sensiblement entre le joint tournant et la bobine, sur toute la longueur du dispositif d'enroulement/déroulement. La première partie de l'arbre de sortie 20 est disposée en amont de la deuxième partie de l'arbre de sortie 20. La première partie et la deuxième partie de l'arbre de sortie 20 peuvent être entourées par l'arbre d'entrée 10. En variante, seule la première partie de l'arbre de sortie 20 peut être entourée par l'arbre d'entrée 10.

L'arbre de sortie 20 peut comprendre une troisième partie disposée en aval de la deuxième partie, la troisième partie raccordant la deuxième partie et l'extrémité de l'arbre de sortie 20 au niveau de la bobine. L'organe de transmission 60 peut être disposé entre la deuxième partie et la troisième partie de l'arbre de sortie 20.

Le dispositif d'enroulement/déroulement peut comprendre un carter 40 dans lequel sont disposés l'au moins un moteur synchrone 30 et le réducteur cycloïdal 50. L'arbre de sortie 20 traverse le carter 40 d'une extrémité à une autre du carter 40. Ainsi, le lien n'est jamais en contact avec l'extérieur lorsqu'il passe entre le joint tournant et la bobine, le lien étant toujours contenu dans l'arbre de sortie 20. Le lien est ainsi encore mieux protégé de potentielles dégradations dues à l'environnement extérieur. Le lien est également protégé des organes internes du dispositif d'enroulement/déroulement.

Dans le cas d'un fluide, l'arbre de sortie 20 peut être utilisé comme un conduit pour transporter le fluide d'un côté à l'autre du dispositif d'enroulement/déroulement. Ainsi, il n'est pas nécessaire d'utiliser un conduit supplémentaire pour le transport du fluide à travers le dispositif d'enroulement/déroulement.

L'arbre de sortie 20 peut présenter un rayon sensiblement constant sur toute la longueur de l'arbre de sortie 20. En variante, l'arbre de sortie 20 peut présenter un rayon variable en fonction d'une position le long de l'axe longitudinal L. Par exemple, la première partie et la deuxième partie de l'arbre de sortie 20, au niveau respectivement du moteur synchrone 30 et du réducteur cycloïdal 50, peuvent présenter un premier rayon. La troisième partie de l'arbre de sortie 20 peut présenter un deuxième rayon. Le premier rayon peut être inférieur au deuxième rayon.

Le dispositif d'enroulement/déroulement peut comprendre entre un et dix moteurs synchrones 30 à aimants permanents, par exemple entre un et quatre moteurs synchrones 30. Les moteurs synchrones 30 peuvent être montés en série le long de la première partie de l'arbre de sortie 20. Ainsi, les moteurs synchrones 30 sont disposés longitudinalement, de l'amont vers l'aval.

Ainsi, le nombre de moteurs synchrones 30 à aimants permanent est adapté selon les besoins du client et les applications envisagées pour le dispositif d'enroulement/déroulement. En particulier, un petit nombre de moteurs synchrones 30, par exemple deux moteurs synchrones 30 de puissance différente, permet de couvrir la plage de puissance de 1.5 à 30 kW, par pas adaptés, qui est une plage de puissance classique.

Un moteur synchrone 30 à aimants permanents comprend un rotor 31 et un stator 32. Le rotor 31 comprend un ensemble d'aimants disposés sensiblement radialement autour de l'axe longitudinal L. Le stator 32 est disposé sensiblement radialement, en vis-à-vis des aimants du rotor 31.

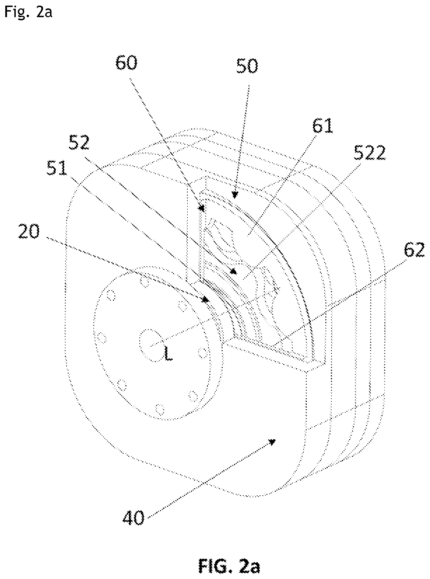

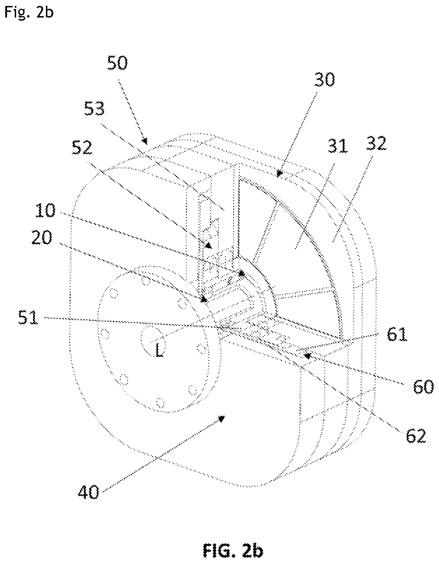

Les aimants permanents peuvent être des aimants trapézoïdaux, présentant une polarité inversée entre deux aimants consécutifs. De tels aimants trapézoïdaux sont par exemple représentés sur la figure 2b. Les bobinages créent un flux magnétique, par exemple un flux axial, qui alterne selon la fréquence du courant les traversant. Les aimants en vis-à-vis se déplacent alors pour suivre le champ tournant, permettant ainsi de créer le couple.

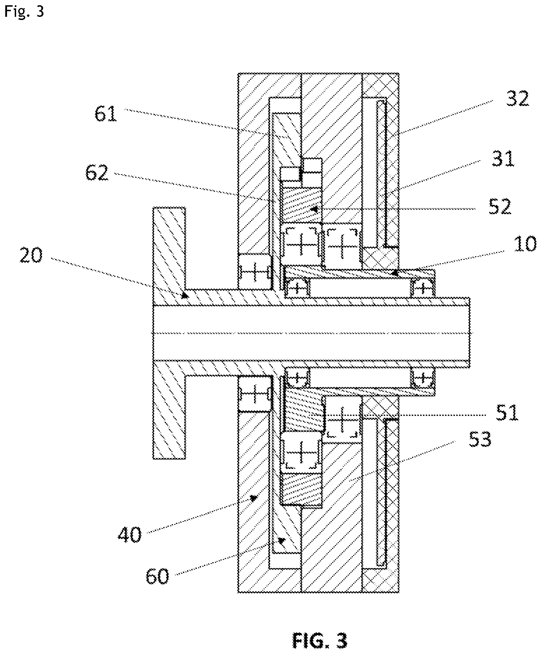

A titre d'exemple non limitatif, la figure 3 illustre un dispositif d'enroulement/déroulement comprenant un seul moteur synchrone 30 à aimants permanents. Les aimants permanents sont disposés sur une face amont du rotor 31, et le stator 32 est disposé en amont du rotor 31, de sorte qu'une face aval du stator 32 soit disposée en vis-à-vis de la face amont du rotor 31.

Un dispositif d'enroulement/déroulement peut comprendre deux ou plus moteurs synchrones 30. Chaque paire de deux moteurs synchrones 30 peut alors être regroupée en un ensemble moteur comprenant un rotor 31 et un stator 32. Le rotor 31 d'un ensemble moteur comprend deux ensembles d'aimants permanents disposés de part et d'autre du rotor 31. Ainsi l'un des deux ensembles d'aimants permanents est disposé sur une face amont du rotor 31, et l'autre des deux ensembles d'aimants permanents est disposé sur une face aval du rotor 31.

Le stator 32 peut être disposé de part et d'autre du rotor 31 de sorte que chaque ensemble d'aimants permanents du rotor 31 soit en vis-à-vis d'une face du stator 32. Avantageusement, deux côtés opposés d'un même aimant permanent peuvent alors former les rotors 31 de deux moteurs contigus. En variante, le stator 32 peut être disposé entre deux rotors 31, les rotors 31 étant disposés de part et d'autre du stator 32, chaque bobinage servant à créer le couple de deux rotors différents.

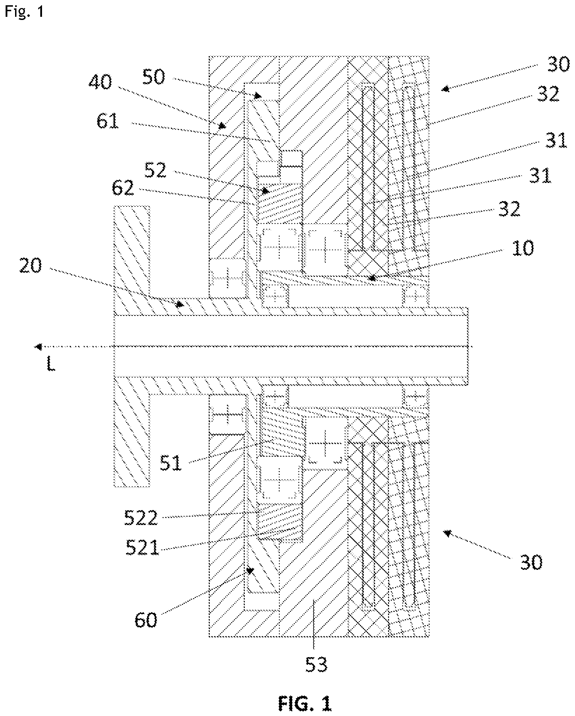

A titre d'exemple non limitatif, la figure 1 illustre un dispositif d'enroulement/déroulement comprenant quatre moteurs synchrones 30 à aimants permanents. Les quatre moteurs synchrones 30 sont regroupés en deux ensembles moteurs comprenant chacun deux moteurs synchrones 30.

L'au moins un moteur synchrone 30 à aimants permanents peut être un moteur synchrone 30 à aimants permanents à flux axial. Un tel moteur synchrone 30 à flux axial présente une compacité améliorée dans la direction longitudinale par rapport à un moteur synchrone à flux radial.

Le réducteur cycloïdal 50 peut comprendre une came 51, ou plusieurs cames 51 montées en série le long de l'axe longitudinal L. Chaque came 51 du dispositif peut présenter sensiblement une même géométrie de came 51.

Chaque came 51 peut comprendre une face interne et une face externe. La came 51 est excentrique. Ainsi, l'au moins une came 51 peut comprendre une face externe présentant une dimension radiale qui varie en fonction de la position angulaire autour de l'axe longitudinal L, c'est-à-dire en fonction d'une direction radiale, lorsque l'au moins une came 51 est montée dans le dispositif d'enroulement/déroulement. La variation de dimension radiale de la face externe de la came 51 forme l'excentricité de la came 51.

L'arbre d'entrée 10 peut présenter un rayon sensiblement constant le long de l'axe longitudinal L. Le rayon de l'arbre d'entrée 10 peut être inférieur à une dimension radiale de la face externe de la came 51 quelle que soit la position angulaire autour de l'axe longitudinal L, c'est-à-dire quelle que soit la direction radiale. La jonction entre la deuxième extrémité de l'arbre d'entrée 10 et la came 51 forme donc une marche d'escalier. La came 51 étant excentrique, la dimension de la marche d'escalier varie en fonction de la position angulaire autour de l'axe longitudinal L.

La face interne de la came 51 peut présenter une symétrie de révolution autour de l'axe longitudinal L lorsque la came 51 est montée dans le dispositif d'enroulement/déroulement. La face interne de la came 51 peut être sensiblement circulaire et centrée autour de l'axe longitudinal L, un rayon de la face interne de la came 51 correspondant sensiblement à un rayon de l'arbre d'entrée 10.

La face externe de la came 51 peut présenter une symétrie de révolution autour d'un axe de came 51 lorsque la came 51 est montée dans le dispositif d'enroulement/déroulement. L'axe de came 51 est parallèle à l'axe longitudinal L mais n'est pas confondu avec celui-ci, l'axe de came 51 étant espacé d'une certaine distance par rapport à l'axe longitudinal L.

La face externe de la came 51 peut être sensiblement circulaire et centrée autour de l'axe de came 51. En d'autres termes, un centre du cercle de la face externe de came 51 est placé sur l'axe de came 51 lorsque la came 51 est montée dans le dispositif d'enroulement/déroulement, et n'est donc pas placé sur l'axe longitudinal L.

Le réducteur cycloïdal 50 peut comprendre un disque cycloïdal 52, ou plusieurs disques cycloïdaux 52 montés en série le long de l'axe longitudinal L. Chaque disque cycloïdal 52 du réducteur cycloïdal 50 peut présenter sensiblement la même géométrie, ou en variante présenter des géométries différentes les uns des autres.

Un disque cycloïdal 52 parmi le ou les disques cycloïdaux 52 du réducteur cycloïdal 50 peut être une roue cycloïdale. Le disque cycloïdal 52 comprend une face interne et une face externe. La face externe du disque cycloïdal 52 comprend une denture cycloïdale externe. La face interne du disque cycloïdal 52 présente une forme et des dimensions correspondant sensiblement à la forme et aux dimensions de la face externe de la came 51. La face externe de la came 51 entraîne en rotation la face interne du disque cycloïdal 52 par l'intermédiaire de moyens d'entraînement du disque cycloïdal 52. Les moyens d'entraînement du disque cycloïdal 52 peuvent comprendre un roulement, tel qu'un roulement à aiguilles ou à rouleaux, disposé entre la came 51 et le disque cycloïdal 52. En variante, les moyens d'entraînement du disque cycloïdal 52 peuvent comprendre un palier lisse, disposé entre la came 51 et le disque cycloïdal 52.

Le disque cycloïdal 52 peut présenter une symétrie de révolution autour d'un axe de disque cycloïdal 52. Lorsque le disque cycloïdal 52 est monté dans le dispositif d'enroulement/déroulement, l'axe de disque cycloïdal 52 est parallèle à l'axe longitudinal L mais n'est pas confondu avec celui-ci, l'axe de disque cycloïdal 52 étant espacé d'une certaine distance par rapport à l'axe longitudinal L. L'axe de disque cycloïdal 52 peut correspondre à l'axe de came 51. En particulier, la face interne du disque cycloïdal 52 peut être sensiblement circulaire, de rayon correspondant sensiblement à un rayon de la face externe de la came 51.

La denture cycloïdale externe du disque cycloïdal 52 peut comprendre des dents arrondies, chaque dent comprenant un fond, un flanc et un sommet. Le fond d'une dent correspond à la partie la plus interne de la dent, et le sommet de la dent correspond à la partie la plus externe de la dent. Le flanc de la dent relie le fond de la dent au sommet de la dent.

La denture cycloïdale externe du disque cycloïdal 52 peut présenter un profil sensiblement de cycloïde. La génératrice de la cycloïde de la denture cycloïdale peut correspondre sensiblement à un cercle inscrit au fond de la denture cycloïdale, c'est-à-dire à un cercle tangent au fond de chaque dent de la denture cycloïdale. En variante, la denture externe du disque cycloïdal 52 peut comprendre un déport de denture pour renforcer la denture et accroitre sa durée de vie et ses performances. La génératrice de la cycloïde est alors déportée par rapport à une génératrice sans déport de denture.

La denture externe du disque cycloïdal 52 peut en variante présenter un profil s'écartant d'une cycloïde théorique, de sorte à minimiser les contraintes s'exerçant sur les dents, et à faciliter l'assemblage de l'engrenage cycloïdal.

La couronne 53 externe du réducteur cycloïdal 50 est fixe, c'est-à-dire qu'elle n'est pas mobile en rotation autour de l'axe longitudinal L. La couronne 53 peut être une roue présentant une symétrie de révolution autour de l'axe longitudinal L. La couronne 53 comprend une denture interne sur laquelle engrène la denture cycloïdale externe du disque cycloïdal 52.

La denture interne de la couronne 53 peut comprendre des dents arrondies, chaque dent comprenant un fond, un flanc et un sommet. Le fond d'une dent correspond à la partie la plus externe de la dent, et le sommet de la dent correspond à la partie la plus interne de la dent. Le flanc de la dent relie le fond de la dent au sommet de la dent. Les dents de la couronne 53 peuvent être circonférentiellement réparties autour de l'axe longitudinal L, c'est-à-dire qu'elles sont disposées à égale distance angulaire les unes des autres.

Chaque dent de la denture interne de la couronne 53 peut présenter un profil sensiblement cylindrique. Une génératrice du cylindre de révolution s'étend suivant l'axe longitudinal L, les cylindres étant répartis sensiblement radialement autour de l'axe longitudinal L. En variante, chaque dent de la denture interne de la couronne 53 peut présenter toute forme adaptée pour coopérer avec les dents de la denture cycloïdale du disque cycloïdal 52. Par exemple, les dents de la couronne 53 peuvent être de forme sensiblement toroïdale, afin d'améliorer le contact avec la denture cycloïdale du disque cycloïdal 52. Des formes toroïdales de dents de couronne 53 peuvent être adaptées pour les réducteurs cycloïdaux 50 présentant de faibles rapports de réduction. En variante, la denture interne de la couronne 53 peut présenter une forme cycloïdale.

La couronne 53 peut posséder un nombre de dents correspondant à un nombre de dents du disque cycloïdal 52 plus une dent. Un tel décalage d'une seule dent permet d'obtenir un plus grand rapport de réduction. Ainsi, si le disque cycloïdal 52 possède n dents, la couronne 53 possède n+1 dents. Au niveau d'une zone de contact entre le disque cycloïdal 52 et la couronne 53, au moins un sommet ou un flanc de la dent du disque cycloïdal 52 peut être en contact avec au moins un flanc d'une dent de la couronne 53. Plusieurs dents du disque cycloïdal 52 et/ou de la couronne 53 peuvent être en contact en même temps.

Un rayon d'un cercle tangent au sommet de chaque dent de la denture cycloïdale externe du disque cycloïdal 52 peut être inférieur à un rayon d'un cercle tangent au fond de chaque dent de la denture interne de la couronne 53. Ainsi, le disque cycloïdal 52 peut tourner à l'intérieur de la couronne 53 fixe en suivant un mouvement cycloïdal excentrique.

Dans un premier exemple de réalisation, la couronne 53 fixe comprend un bâti rigide et un ensemble d'axes. Le bâti rigide comprend un ensemble d'alésages circonférentiellement répartis autour de l'axe longitudinal L. Chaque axe de l'ensemble d'axe est inséré dans un alésage respectif de l'ensemble d'alésages du bâti de la couronne 53, de sorte à former la denture interne de la couronne 53. Cette configuration de bâti rigide et d'ensemble d'axes indépendants assemblés rigidement dans le bâti permet d'accéder à des rapports de réduction plus élevés. Chaque axe de l'ensemble d'axes peut être sensiblement cylindrique et chaque alésage du bâti de la couronne 53 peut être sensiblement cylindrique, de sorte à conduire à des dents de profil sensiblement cylindrique. En variante, chaque axe et chaque alésage peuvent être de forme sensiblement toroïdale, ou présenter toute forme adaptée pour assurer la coopération avec les dents du disque cycloïdal 52.

Dans un deuxième exemple de réalisation, la couronne 53 est formée d'une seule pièce et comprend des saillies adaptées pour former les dents de la couronne 53. Les saillies peuvent être de forme sensiblement cylindrique, toroïdale, ou de toute autre forme permettant d'accéder à un contact satisfaisant avec la denture cycloïdale du disque cycloïdal 52.

L'organe de transmission 60 est mobile en rotation autour de l'axe longitudinal L. L'organe de transmission 60 peut comprendre une première partie 61 et une deuxième partie 62. La deuxième partie 62 de l'organe de transmission 60 peut être sensiblement radiale et être adaptée pour raccorder la première partie 61 avec l'arbre de sortie 20. L'organe de transmission 60 peut être agencé de sorte qu'une rotation excentrique et cycloïdale de l'au moins un disque cycloïdal 52 entraîne une rotation autour de l'axe longitudinal L de la première partie 61 de l'organe de transmission 60. Ainsi, la rotation excentrique et cycloïdale du disque cycloïdal 52 est transformée en rotation autour de l'axe longitudinal L par une coopération entre le disque cycloïdal 52 et la première partie 61 de l'organe de transmission 60.

La première partie 61 de l'organe de transmission 60 peut être formée d'une seule pièce avec la deuxième partie 62 de l'organe de transmission 60. L'organe de transmission 60 peut être formé d'une pièce avec l'arbre de sortie 20.

Une face externe de la couronne 53 peut être montée affleurant avec une face externe du carter 40, et/ou avec une face externe du stator 32, et/ou avec une face externe de la première partie 61 de l'organe de transmission 60. Ainsi, une face externe de l'ensemble constitué par le moteur synchrone 30, le réducteur cycloïdal 50, et le carter 40 peut être sensiblement plane.

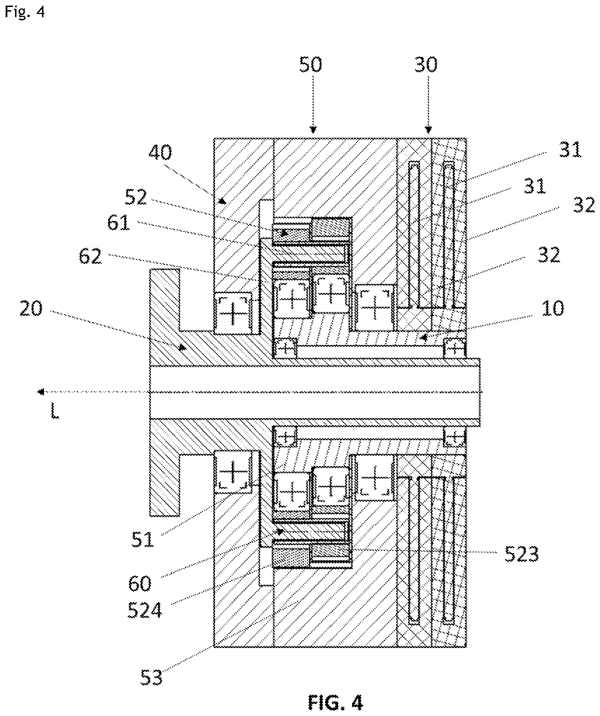

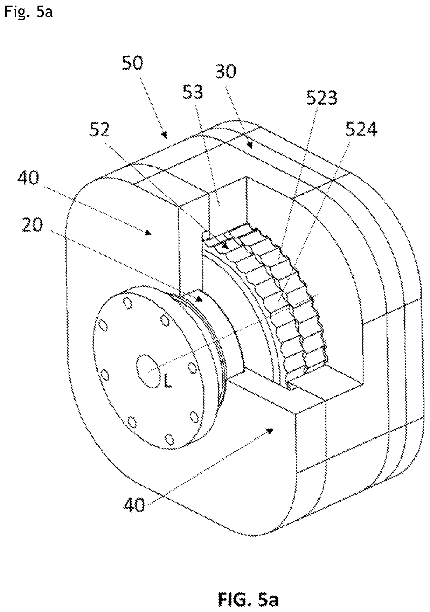

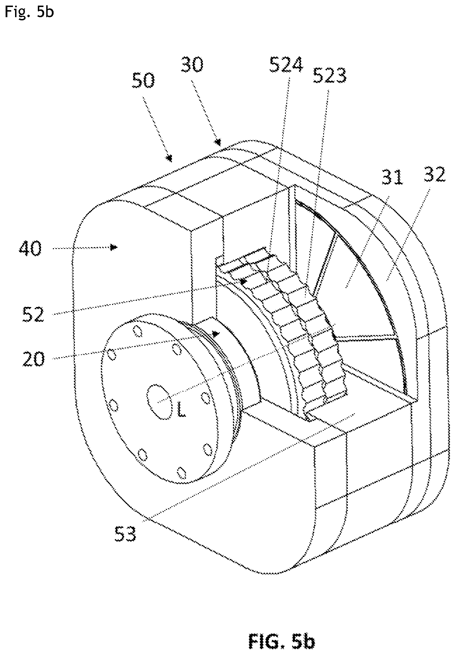

Dans un premier mode de réalisation, illustré à titre d'exemple non limitatif aux figures 4, 5a et 5b, le réducteur cycloïdal 50 présente une architecture à un étage, ou architecture simple train.

L'au moins un disque cycloïdal 52 comprend alors au moins un alésage longitudinal. La première partie 61 de l'organe de transmission 60 forme au moins un doigt longitudinal adapté pour s'étendre dans l'au moins un alésage longitudinal de l'au moins un disque cycloïdal 52, de sorte à transmettre le déplacement angulaire de l'au moins un disque cycloïdal 52 à la première partie 61 de l'organe de transmission 60.

Ce premier mode de réalisation présente l'avantage de ne nécessiter qu'un unique profil de disque cycloïdal 52 pour convertir le mouvement excentrique du disque cycloïdal 52 en un mouvement circulaire de la première partie 61 de l'organe de transmission 60. Ainsi, une seule roue cycloïdale est à tailler pour un réducteur cycloïdal 50.

Le doigt longitudinal s'étend longitudinalement, en saillie depuis la deuxième partie 62 radiale de l'organe de transmission 60. Le doigt longitudinal peut être sensiblement cylindrique.

L'alésage longitudinal peut s'étendre à travers le disque cycloïdal 52, ou en variante ne pas être traversant, l'alésage longitudinal s'étendant alors seulement dans une partie aval du disque cycloïdal 52.

L'alésage longitudinal peut être sensiblement cylindrique, et présenter des dimensions supérieures à celles du doigt longitudinal. Ainsi, lors de la rotation du disque cycloïdal 52, l'alésage longitudinal du disque cycloïdal 52 tourne à la fois autour du doigt longitudinal et autour de l'axe longitudinal L, de sorte à entraîner le doigt longitudinal en rotation autour de l'axe longitudinal L. En d'autres termes, la dimension de l'alésage longitudinal de l'au moins un disque cycloïdal 52 permet d'absorber la composante de mouvement radial du disque cycloïdal 52 qui résulte de la rotation excentrique du disque cycloïdal 52, tout en transmettant la composante de rotation autour de l'axe longitudinal L.

Plus particulièrement, le disque cycloïdal 52 peut comprendre une pluralité d'alésages longitudinaux circonférentiellement répartis autour de l'axe longitudinal L, et la première partie 61 de l'organe de transmission 60 former une pluralité de doigts longitudinaux circonférentiellement répartis autour de l'axe longitudinal L. Chaque doigt longitudinal est adapté pour s'étendre dans un alésage correspondant du disque cycloïdal 52. Ainsi, la tenue mécanique de l'ensemble est améliorée, le réducteur cycloïdal 50 peut supporter des chocs et des pressions plus importantes, et le rapport de réduction peut être augmenté.

Dans le premier mode de réalisation, le réducteur cycloïdal 50 peut comprendre un ou plusieurs disques cycloïdaux 52 montés en série le long de la deuxième partie de l'arbre de sortie 20. Par exemple, ainsi qu'illustré en figures 4, 5a et 5b, le réducteur cycloïdal 50 peut comprendre deux disques cycloïdaux 523, 524 sensiblement identiques et montés en série le long de l'axe longitudinal L, en particulier le long de la deuxième partie de l'arbre de sortie 20.

Les deux disques cycloïdaux 523, 524 sont placés en excentricité opposée dans le réducteur cycloïdal 50. En d'autres termes, les deux disques cycloïdaux 523, 524 sont placés sensiblement en opposition de phase angulairement, de sorte qu'un fond d'une dent cycloïdale d'un premier disque cycloïdal 523 soit décalé par rapport à un fond d'une dent cycloïdale d'un deuxième disque cycloïdal 524, et vice-versa. La position de l'excentration du deuxième disque cycloïdal 524 peut être sensiblement à 180° de la position de l'excentration du premier disque cycloïdal 523.

Une telle configuration avec deux disques cycloïdaux 523, 524 disposés avec des excentricités opposées permet, en faisant tourner les deux roues cycloïdales en opposition l'une avec l'autre, d'équilibrer le balourd. Par ailleurs, cette configuration permet de répartir les pressions de contact sur les différents éléments, et de limiter la pression de contact sur chaque dent des disques cycloïdaux 523, 524, la pression se répartissant sur un nombre de dent proportionnel au nombre de disque cycloïdaux. Par ailleurs, en choisissant avantageusement les rapports de réduction, en particulier avec des rapports de réduction impairs, les deux disques cycloïdaux 523, 524 sont identiques. Par conséquent, les mêmes pièces sont fabriquées deux fois. Ainsi, des gains en coûts de production peuvent être effectués. Par ailleurs, cette solution est peu limitée dans les petites réductions, par exemple en-dessous de 20.

En revanche, la réversibilité de cette architecture est limitée, car la reprise du mouvement excentrique des disques cycloïdaux 523, 524 en excentricité opposée pour le ramener à un mouvement circulaire engendre des frottements au niveau des doigts qui reprennent le mouvement excentrique en roulant dans des alésages de diamètre supérieur. De ce fait, la réversibilité dépend beaucoup de la qualité de contact de ces doigts.

Les deux disques cycloïdaux 523, 524 peuvent être identiques et engrener avec une couronne 53 commune, et/ou être montés solidaires en rotation d'une came 51 commune. Lorsque les roues des disques cycloïdaux 523, 524 possèdent chacune n dents et que la couronne 53 possède n+1 dents, le rapport de réduction est alors directement égal au nombre de dents des roues des disques cycloïdaux 523, 524.

En variante, chacun des deux disques cycloïdaux 523, 524 peut être monté sur une couronne 53 fixe respective, les deux couronnes 53 étant disposées en série le long de l'axe longitudinal L. En variante ou en outre, chacun des deux disques cycloïdaux 523, 524 peut être monté solidaire en rotation d'une came 51 respective, les deux cames 51 étant disposées en série le long de l'axe longitudinal L.

Chaque disque cycloïdal 523, 524 comprend au moins un alésage longitudinal. Les alésages longitudinaux des deux disques cycloïdaux 523, 524 sont agencés en vis-à-vis l'un de l'autre de sorte à former au moins une paire d'alésages longitudinaux lorsque les disques cycloïdaux 523, 524 sont montés dans le dispositif d'enroulement/déroulement. L'au moins un doigt de l'organe de transmission 60 s'étend dans l'au moins une paire d'alésages longitudinaux des deux disques cycloïdaux 523, 524.

Lorsque les deux disques cycloïdaux 523, 524 comprennent une pluralité d'alésages longitudinaux circonférentiellement répartis autour de l'axe longitudinal L, les alésages longitudinaux forment une pluralité de paires d'alésages longitudinaux circonférentiellement réparties autour de l'axe longitudinal L. Chaque doigt de la pluralité de doigts longitudinaux de la première partie 61 de l'organe de transmission 60 s'étend dans une paire correspondante d'alésages longitudinaux.

Les deux disques cycloïdaux 523, 524 sont solidaires l'un de l'autre, de sorte qu'ils présentent des vitesses de rotation autour de l'axe longitudinal L identiques.

Dans le premier mode de réalisation, le réducteur cycloïdal 50 peut comprendre plus de deux disques cycloïdaux 52 montés en série le long de la deuxième partie de l'arbre de sortie 20. Un plus grand nombre de disques cycloïdaux 52 permet de limiter la pression de contact sur chaque dent des disques cycloïdaux 52, la pression se répartissant sur un nombre de dent proportionnel au nombre de disque cycloïdaux.

Dans un deuxième mode de réalisation, illustré à titre d'exemple non limitatif aux figures 1, 2a et 2b, et 3, le réducteur cycloïdal 50 comprend une architecture à deux étages, ou architecture à deux trains. Le réducteur cycloïdal 50 comprend alors deux disques cycloïdaux 521, 522 de profils différents, montés en série le long de l'axe longitudinal L.

Le réducteur cycloïdal 50 comprend un premier disque cycloïdal 521 et un deuxième disque cycloïdal 522. Le premier disque cycloïdal 521 est monté solidaire en rotation de l'au moins une came 51. Le deuxième disque cycloïdal 522 est monté solidaire en rotation du premier disque cycloïdal 521.

La première partie 61 de l'organe de transmission 60 peut comprendre une denture interne disposée à l'extérieur du deuxième disque cycloïdal 522 et adaptée pour coopérer avec une denture cycloïdale externe du deuxième disque cycloïdal 522 de sorte qu'une rotation excentrique du deuxième disque cycloïdal 522 entraîne une rotation autour de l'axe longitudinal L de la première partie 61 de l'organe de transmission 60.

Le premier disque cycloïdal 521 engrène avec la denture interne de la couronne 53 fixe, d'une manière similaire à celle décrite ci-dessus en référence à l'au moins un disque cycloïdal 52 du réducteur cycloïdal 50. Si le premier disque cycloïdal 521 possède n dents, la couronne 53 peut avantageusement posséder n+1 dents.

La rotation excentrique du premier disque cycloïdal 521 entraîne une rotation excentrique correspondante du deuxième disque cycloïdal 522. Le deuxième disque cycloïdal 522 engrène avec la denture interne de la première partie 61 de l'organe de transmission 60. La denture interne de la première partie 61 de l'organe de transmission 60 coopère avec la denture cycloïdale externe du deuxième disque cycloïdal 522 de sorte à transmettre le déplacement angulaire du deuxième disque cycloïdal 522 à la première partie 61 de l'organe de transmission 60. Le mouvement est ainsi repris par la première partie 61 de l'organe de transmission 60 sur l'extérieur du deuxième disque cycloïdal 522, pour être transmis à l'arbre de sortie 20 du dispositif d'enroulement/déroulement. La première partie 61 de l'organe de transmission 60 est guidée en rotation par le biais de l'arbre de sortie 20, et est ainsi contrainte de se décaler angulairement en rotation autour de l'axe longitudinal L.

Ce deuxième mode de réalisation présente l'avantage de ne pas nécessiter de doigts pour convertir le mouvement excentrique de la cycloïde en un mouvement circulaire. Ainsi, la réversibilité de l'ensemble est améliorée.

La première partie 61 de l'organe de transmission 60 peut être une roue présentant une symétrie de révolution autour de l'axe longitudinal L. La première partie 61 de l'organe de transmission 60 comprend une denture interne sur laquelle engrène la denture cycloïdale externe du deuxième disque cycloïdal 522. Une géométrie de la première partie 61 de l'organe de transmission 60 peut être similaire à une géométrie de la couronne 53.

La denture interne de la première partie 61 de l'organe de transmission 60 peut comprendre des dents arrondies, chaque dent comprenant un fond, un flanc et un sommet. Le fond d'une dent correspond à la partie la plus externe de la dent, et le sommet de la dent correspond à la partie la plus interne de la dent. Le flanc de la dent relie le fond de la dent au sommet de la dent. Les dents de la première partie 61 de l'organe de transmission 60 peuvent être circonférentiellement réparties autour de l'axe longitudinal L, c'est-à-dire qu'elles sont disposées à égale distance angulaire les unes des autres.

Chaque dent de la denture interne de la première partie 61 de l'organe de transmission 60 peut présenter un profil sensiblement cylindrique. Une génératrice du cylindre de révolution s'étend sensiblement suivant l'axe longitudinal L, les cylindres formant les dents étant répartis sensiblement radialement autour de l'axe longitudinal L. En variante, chaque dent de la denture interne de la première partie 61 de l'organe de transmission 60 peut présenter toute forme adaptée pour coopérer avec les dents de la denture cycloïdale du deuxième disque cycloïdal 522. Par exemple, les dents de la première partie 61 de l'organe de transmission 60 peuvent être de forme sensiblement toroïdale, afin d'améliorer le contact avec la denture cycloïdale du deuxième disque cycloïdal 522. Le contact est ainsi effectué au niveau du centre de la dent, et s'étend depuis le centre de la dent au cours de la vie du réducteur.

La première partie 61 de l'organe de transmission 60 peut posséder un nombre de dents correspondant à un nombre de dents du deuxième disque cycloïdal 522 plus une dent. Un tel décalage d'une seule dent permet un plus grand rapport de réduction. Ainsi, si le deuxième disque cycloïdal 522 possède N dents, la première partie 61 de l'organe de transmission 60 possède N+1 dents.

Au niveau d'une zone de contact entre le deuxième disque cycloïdal 522 et la première partie 61 de l'organe de transmission 60, un sommet ou un flanc de la dent du deuxième disque cycloïdal 522 est en contact avec au moins un flanc d'une dent de la première partie 61 de l'organe de transmission 60. Plusieurs dents du deuxième disque cycloïdal 522 et/ou de la première partie 61 de l'organe de transmission 60 peuvent être en contact en même temps. La rotation du deuxième disque cycloïdal 522 dans la première partie 61 de l'organe de transmission 60 pousse en réaction, par le biais du contact dent à dent, la première partie 61 de l'organe de transmission 60, la faisant ainsi tourner en rotation autour de l'axe longitudinal L.

Dans un premier exemple de réalisation, la première partie 61 de l'organe de transmission 60

comprend un bâti rigide et un ensemble d'axes. Le bâti rigide comprend un ensemble d'alésages circonférentiellement répartis autour de l'axe longitudinal L. Chaque axe de l'ensemble d'axes est inséré dans un alésage respectif de l'ensemble d'alésages du bâti de la première partie 61 de l'organe de transmission 60, de sorte à former la denture de la première partie 61 de l'organe de transmission 60. Cette configuration de bâti rigide et d'ensemble d'axes indépendants assemblés rigidement dans le bâti permet d'accéder à des rapports de réduction plus élevés. Chaque axe de l'ensemble d'axes peut être sensiblement cylindrique et chaque alésage du bâti de la première partie 61 de l'organe de transmission 60 peut être sensiblement cylindrique, de sorte à conduire à des dents de profil sensiblement cylindrique, sensiblement toroïdal, ou de toute forme adaptée pour assurer la coopération avec les dents du deuxième disque cycloïdal 522.

Dans un deuxième exemple de réalisation, la première partie 61 de l'organe de transmission 60 est formée d'une seule pièce et comprend des saillies adaptées pour former les dents de la première partie 61 de l'organe de transmission 60. Les saillies peuvent être de forme sensiblement cylindrique, toroïdale, ou de toute autre forme permettant d'accéder à un contact satisfaisant avec la denture cycloïdale du deuxième disque cycloïdal 522.

Le rapport de réduction d'un réducteur cycloïdal 50 à deux étages, dont le premier disque cycloïdal 521 comprend n dents, la couronne 53 comprend n+1 dents, le deuxième disque cycloïdal 522 comprend N dents, et la première partie 61 de l'organe de transmission 60 comprend N+1 dents, peut s'exprimer sous la forme

$$R = \frac{1}{1-\frac{(n+1)*N}{(N+1)*n}}$$ , ou encore $$R = \frac{n*N+n}{n-N}$$ . Par exemple, pour N=8 et n=10, le rapport de réduction du réducteur cycloïdal est de R = 45.

Le dispositif d'enroulement/déroulement peut être intégré dans un enrouleur de lien. L'enrouleur de lien comprend une bobine, un dispositif d'enroulement/déroulement tel que décrit ci-dessus, un joint tournant, et un dispositif de contrôle. L'arbre de sortie 20 est agencé pour le passage du lien entre la bobine et le joint tournant, l'arbre de sortie 20 étant adapté pour entraîner la bobine en rotation autour de l'axe longitudinal L.

Le dispositif de contrôle est adapté pour contrôler une consigne et/ou piloter le ou les moteurs synchrones 30, de sorte que le dispositif de contrôle et le dispositif d'enroulement/déroulement fournissent un couple d'enroulement/déroulement adapté.

Le couple d'enroulement/déroulement est susceptible d'évoluer en fonction d'un niveau d'enroulement du lien. En effet, le rayon d'enroulement change en fonction de la quantité de lien enroulée sur la bobine, par exemple au cours du déplacement de deux éléments entre lesquels le lien est déployé. Le dispositif de contrôle et le dispositif d'enroulement/déroulement peuvent donc être adaptés pour fournir un couple d'enroulement/déroulement adapté en fonction d'un niveau d'enroulement du lien.

Par ailleurs, le couple d'enroulement/déroulement est susceptible d'évoluer en fonction d'une phase de fonctionnement de l'enrouleur. Une telle phase peut être caractérisée par des paramètres tels qu'une vitesse, une accélération, une vitesse établie, etc., dans le premier sens de rotation ou dans le deuxième sens de rotation. Le dispositif de contrôle et le dispositif d'enroulement/déroulement peuvent donc être adaptés pour fournir un couple d'enroulement/déroulement adapté en fonction d'une phase de fonctionnement de l'enrouleur.

En variante ou en outre, le dispositif de contrôle et le dispositif d'enroulement/déroulement peuvent donc être adaptés pour fournir un couple d'enroulement/déroulement prédéterminé.

En variante ou en outre, le dispositif de contrôle et le dispositif d'enroulement/déroulement peuvent donc être adaptés pour fournir un couple d'enroulement/déroulement régulé en fonction d'une mesure de l'effet de l'enroulement et/ou du déroulement sur le lien. La régulation du couple est alors asservie et effectuée en boucle fermée.

## Revendications

1. Dispositif d'enroulement/déroulement d'un lien, comprenant :

> - un arbre d'entrée (10) mobile en rotation autour d'un axe longitudinal (L),
> - un arbre de sortie (20) sensiblement coaxial à l'arbre d'entrée (10), adapté pour le montage d'un joint tournant solidaire en rotation de l'arbre de sortie, l'arbre de sortie (20) étant un arbre creux traversant agencé pour le passage du lien entre une bobine et le joint tournant, l'arbre de sortie (20) étant adapté pour entraîner la bobine en rotation autour de l'axe longitudinal (L),
> - au moins un moteur synchrone (30) à aimants permanents comprenant un rotor (31) agencé autour d'une première partie de l'arbre de sortie (20), le rotor (31) étant solidaire en rotation de l'arbre d'entrée (10),
> - un réducteur cycloïdal (50) agencé autour d'une seconde partie de l'arbre de sortie (20), le réducteur cycloïdal (50) comprenant au moins une came (51) interne, une couronne (53) externe et au moins un disque cycloïdal (52) disposé entre chaque came (51) et la couronne (53), dans lequel chaque came (51) est montée solidaire en rotation de l'arbre d'entrée (10), l'au moins un disque cycloïdal (52) est monté solidaire en rotation de chaque came (51), et dans lequel chaque came (51) est excentrique, de sorte qu'une rotation de chaque came (51) autour de l'axe longitudinal (L) entraîne une rotation de l'au moins un disque cycloïdal (52) selon un mouvement excentrique et cycloïdal, et
- un organe de transmission (60) adapté pour transmettre un déplacement angulaire de l'au moins un disque cycloïdal (52) à l'arbre de sortie (20), de sorte qu'une rotation excentrique et cycloïdale de l'au moins un disque cycloïdal (52) entraîne une rotation autour de l'axe longitudinal (L) de l'arbre de sortie (20).

2. Dispositif d'enroulement/déroulement d'un lien selon la revendication 1, dans lequel l'arbre d'entrée (10) est agencé autour d'au moins une partie de l'arbre de sortie (20).

3. Dispositif d'enroulement/déroulement d'un lien selon l'une des revendications 1 ou 2, comprenant en outre un carter (40) dans lequel sont disposés l'au moins un moteur synchrone (30) et le réducteur cycloïdal (50), et dans lequel l'arbre de sortie (20) traverse le carter (40) d'une extrémité à une autre du carter (40).

4. Dispositif d'enroulement/déroulement d'un lien selon l'une des revendications 1 à 3, comprenant entre un et quatre moteurs synchrones (30) montés en série le long de la première partie de l'arbre de sortie (20).

5. Dispositif d'enroulement/déroulement d'un lien selon l'une des revendications 1 à 4, dans lequel l'au moins un moteur synchrone (30) est un moteur synchrone à aimants permanents à flux axial.

6. Dispositif d'enroulement/déroulement d'un lien selon l'une des revendications 1 à 5, dans lequel l'au moins une came (51) et l'arbre d'entrée (10) sont formés d'une seule pièce, et dans lequel chaque came (51) comprend une face externe présentant une dimension radiale qui varie en fonction de la position angulaire autour de l'axe longitudinal (L), lorsque chaque came (51) est montée dans le dispositif d'enroulement/déroulement.

7. Dispositif d'enroulement/déroulement d'un lien selon l'une des revendications 1 à 6, dans lequel l'organe de transmission (60) comprend une première partie (61) et une deuxième partie (62) sensiblement radiale adaptée pour raccorder la première partie (61) avec l'arbre de sortie (20), l'organe de transmission (60) étant agencé de sorte qu'une rotation excentrique et cycloïdale de l'au moins un disque cycloïdal (52) entraîne une rotation autour de l'axe longitudinal (L) de la première partie (61) de l'organe de transmission (60).

8. Dispositif d'enroulement/déroulement d'un lien selon la revendication 7, dans lequel l'au moins un disque cycloïdal (52) comprend au moins un alésage longitudinal, et dans lequel la première partie (61) de l'organe de transmission (60) forme au moins un doigt longitudinal adapté pour s'étendre dans l'au moins un alésage longitudinal de l'au moins un disque cycloïdal (52), de sorte à transmettre le déplacement angulaire de l'au moins un disque cycloïdal (52) à la première partie (61) de l'organe de transmission (60).

9. Dispositif d'enroulement/déroulement d'un lien selon la revendication 8, dans lequel le réducteur cycloïdal (50) comprend deux disques cycloïdaux (523, 524) sensiblement identiques et montés en série le long de l'axe longitudinal (L), les deux disques cycloïdaux (523, 524) étant placés en excentricité opposée dans le réducteur cycloïdal (50), dans lequel chaque disque cycloïdal (523, 524) comprend au moins un alésage longitudinal, les alésages longitudinaux des deux disques cycloïdaux (523, 524) étant agencées en vis-à-vis l'un de l'autre de sorte à former au moins une paire d'alésages longitudinaux lorsque les disques cycloïdaux (523, 524) sont montés dans le dispositif d'enroulement/déroulement, l'au moins un doigt (61) de l'organe de transmission (60) s'étendant dans l'au moins une paire d'alésages longitudinaux des deux disques cycloïdaux (523, 524).

10. Dispositif d'enroulement/déroulement d'un lien selon la revendication 7, dans lequel le réducteur cycloïdal (50) comprend un premier disque cycloïdal (521) et un deuxième disque cycloïdal (522), le premier disque cycloïdal (521) étant monté solidaire en rotation de l'au moins une came (51), le deuxième disque cycloïdal (522) étant monté solidaire en rotation du premier disque cycloïdal (521), dans lequel la première partie (61) de l'organe de transmission (60) comprend une denture interne disposée à l'extérieur du deuxième disque cycloïdal (522) et adaptée pour coopérer avec une denture cycloïdale externe du deuxième disque cycloïdal (522) de sorte qu'une rotation excentrique du deuxième disque cycloïdal (522) entraîne une rotation autour de l'axe longitudinal (L) de la première partie (61) de l'organe de transmission (60).

11. Dispositif d'enroulement/déroulement d'un lien selon la revendication 10, dans lequel la première partie (61) de l'organe de transmission (60) comprend un bâti rigide et un ensemble d'axes sensiblement cylindriques, le bâti rigide comprenant un ensemble d'alésages sensiblement cylindriques circonférentiellement répartis autour de l'axe longitudinal (L), dans lequel chaque axe de l'ensemble d'axes est inséré dans un alésage respectif de l'ensemble d'alésages du bâti de la première partie (61) de l'organe de transmission (60), de sorte à former la denture interne de la première partie (61) de l'organe de transmission (60).

12. Enrouleur d'un lien, l'enrouleur comprenant une bobine, un dispositif d'enroulement/déroulement selon l'une des revendications 1 à 11, un joint tournant, et un dispositif de contrôle, dans lequel le dispositif de contrôle est adapté pour piloter le moteur synchrone (30), de sorte que le dispositif de contrôle et le dispositif d'enroulement/déroulement fournissent un couple d'enroulement/déroulement adapté.

**Patentansprüche**

1. Vorrichtung zum Auf- und Abwickeln eines Bandes, umfassend:

- eine um eine Längsachse (L) rotationsbewegliche Eingangswelle (10),
- eine Ausgangswelle (20), die im Wesentlichen koaxial zur Eingangswelle (10) ist, die für die Anbringung einer Drehverbindung geeignet ist, die mit der Ausgangswelle rotatorisch fest verbunden ist, wobei die Ausgangswelle (20) eine durchgehende Hohlwelle ist, die für den Durchgang des Bandes zwischen einer Spule und der Drehverbindung eingerichtet ist, wobei die Ausgangswelle (20) geeignet ist, die Spule um die Längsachse (L) rotatorisch anzutreiben,
- mindestens einen Synchronmotor (30) mit Permanentmagneten, der einen Rotor (31) umfasst, der um einen ersten Teil der Ausgangswelle (20) eingerichtet ist, wobei der Rotor (31) mit der Eingangswelle (10) rotatorisch fest verbunden ist,
- ein Zykloidgetriebe (50), das um einen zweiten Teil der Ausgangswelle (20) eingerichtet ist, wobei das Zykloidgetriebe (50) mindestens einen inneren Nocken (51), einen äußeren Kranz (53) und mindestens eine zwischen jedem Nocken (51) und dem Kranz (53) angeordnete Zykloidscheibe (52) umfasst, wobei jeder Nocken (51) mit der Eingangswelle (10) rotatorisch fest verbunden ist, die mindestens eine Zykloidscheibe (52) mit jedem Nocken (51) rotatorisch fest verbunden ist, und wobei jeder Nocken (51) derart exzentrisch ist, dass eine Rotation jedes Nockens (51) um die Längsachse (L) eine Rotation der mindestens einen Zykloidscheibe (52) gemäß einer exzentrischen und zykloiden Bewegung bewirkt, und
- ein Übertragungselement (60), das geeignet ist, eine Winkelbewegung der mindestens einen Zykloidscheibe (52) auf die Ausgangswelle (20) zu übertragen, so dass eine exzentrische und zykloide Rotation der mindestens einen Zykloidscheibe (52) eine Rotation um die Längsachse (L) der Ausgangswelle (20) bewirkt.

2. Vorrichtung zum Auf- und Abwickeln eines Bandes nach Anspruch 1, wobei die Eingangswelle (10) um mindestens einen Teil der Ausgangswelle (20) angeordnet ist.

3. Vorrichtung zum Auf- und Abwickeln eines Bandes nach einem der Ansprüche 1 oder 2, die ferner ein Gehäuse (40) umfasst, in dem der mindestens eine Synchronmotor (30) und das Zykloidgetriebe (50) angeordnet sind, und in dem die Ausgangswelle (20) das Gehäuse (40) von einem Ende zum anderen des Gehäuses (40) durchquert.

4. Vorrichtung zum Auf- und Abwickeln eines Bandes nach einem der Ansprüche 1 bis 3, die zwischen einem und vier Synchronmotoren (30) umfasst, die entlang des ersten Teils der Ausgangswelle (20) in Reihe angebracht sind.

5. Vorrichtung zum Auf- und Abwickeln eines Bandes nach einem der Ansprüche 1 bis 4, wobei der mindestens eine Synchronmotor (30) ein Synchronmotor mit Permanentmagneten mit axialem Fluss ist.

6. Vorrichtung zum Auf- und Abwickeln eines Bandes nach einem der Ansprüche 1 bis 5, wobei der mindestens eine Nocken (51) und die Eingangswelle (10) einstückig ausgebildet sind, und wobei jeder Nocken (51) eine Außenfläche umfasst, die eine radiale Abmessung aufweist, die sich in Abhängigkeit von der Winkelposition um die Längsachse (L) ändert, wenn jeder Nocken (51) in der Vorrichtung zum Auf- und Abwickeln angebracht ist.

7. Vorrichtung zum Auf- und Abwickeln eines Bandes nach einem der Ansprüche 1 bis 6, wobei das Übertragungselement (60) einen ersten Teil (61) und einen zweiten, im Wesentlichen radialen Teil (62) umfasst, der geeignet ist, den ersten Teil (61) mit der Ausgangswelle (20) zu verbinden, wobei das Übertragungselement (60) derart eingerichtet ist, dass eine exzentrische und zykloide Rotation der mindestens einen Zykloidscheibe (52) eine Rotation um die Längsachse (L) des ersten Teils (61) des Übertragungselements (60) bewirkt.

8. Vorrichtung zum Auf- und Abwickeln eines Bandes nach Anspruch 7, wobei die mindestens eine Zykloidscheibe (52) mindestens eine Längsbohrung umfasst und wobei der erste Teil (61) des Übertragungselements (60) mindestens einen Längsfinger bildet, der geeignet ist, sich in die mindestens eine Längsbohrung der mindestens einen Zykloidscheibe (52) derart zu erstrecken, dass die Winkelbewegung der mindestens einen Zykloidscheibe (52) auf den ersten Teil (61) des Übertragungselements (60) übertragen wird.

9. Vorrichtung zum Auf- und Abwickeln eines Bandes nach Anspruch 8, wobei das Zykloidgetriebe (50) zwei im Wesentlichen identische Zykloidscheiben (523, 524) umfasst, und die entlang der Längsachse (L) in Reihe angebracht sind, wobei die beiden Zykloidscheiben (523, 524) in dem Zykloidgetriebe (50) in entgegengesetzter Exzentrizität platziert sind, wobei jede Zykloidscheibe (523, 524) mindestens eine Längsbohrung umfasst, wobei die Längsbohrungen der beiden Zykloidscheiben (523, 524) derart einander gegenüberliegend eingerichtet sind, dass sie mindestens ein Paar Längsbohrungen bilden, wenn die Zykloidscheiben (523, 524) in der Vorrichtung zum Auf- und Abwickeln angebracht sind, wobei sich der mindestens eine Finger (61) des Übertragungselements (60) in das mindestens eine Paar Längsbohrungen der beiden Zykloidscheiben (523, 524) erstreckt.

10. Vorrichtung zum Auf- und Abwickeln eines Bandes nach Anspruch 7, wobei das Zykloidgetriebe (50) eine erste Zykloidscheibe (521) und eine zweite Zykloidscheibe (522) umfasst, wobei die erste Zykloidscheibe (521) mit dem mindestens einen Nocken (51) rotatorisch fest verbunden ist, die zweite Zykloidscheibe (522) mit der ersten Zykloidscheibe (521) rotatorisch fest verbunden ist, wobei der erste Teil (61) des Übertragungselements (60) eine Innenverzahnung aufweist, die außerhalb der zweiten Zykloidscheibe (522) angeordnet und zum Zusammenwirken mit einer äußeren Zykloidverzahnung der zweiten Zykloidscheibe (522) derart geeignet ist, dass eine exzentrische Rotation der zweiten Zykloidscheibe (522) eine Rotation um die Längsachse (L) des ersten Teils (61) des Übertragungselements (60) bewirkt.

11. Vorrichtung zum Auf- und Abwickeln eines Bandes nach Anspruch 10, wobei der erste Teil (61) des Übertragungselements (60) einen starren Rahmen und eine Anordnung von im Wesentlichen zylindrischen Achsen umfasst, wobei der starre Rahmen eine Anordnung von im Wesentlichen zylindrischen Bohrungen umfasst, die umfangmäßig um die Längsachse (L) herum verteilt sind, wobei jede Achse der Achsenanordnung in eine entsprechende Bohrung der Bohrungsanordnung des Rahmens des ersten Teils (61) des Übertragungselements (60) derart eingesetzt ist, dass die Innenverzahnung des ersten Teils (61) des Übertragungselements (60) gebildet wird.

12. Aufwickler eines Bandes, wobei der Aufwickler eine Spule, eine Vorrichtung zum Auf- und Abwickeln nach einem der Ansprüche 1 bis 11, eine Drehverbindung und eine Steuervorrichtung umfasst, wobei die Steuervorrichtung geeignet ist, den Synchronmotor (30) derart zu steuern, dass die Steuervorrichtung und die Vorrichtung zum Auf- und Abwickeln ein geeignetes Auf- und Abwickelmoment bereitstellen.

**Claims**

1. Device for winding/unwinding a link, comprising:

   - an input shaft (10) movable in rotation about a longitudinal axis (L),
   - an output shaft (20) substantially coaxial to the input shaft (10), adapted for mounting a rotating joint integral in rotation with the output shaft, the output shaft (20) being a hollow through shaft arranged for the passage of the link between a reel and the rotating joint, the output shaft (20) being adapted to drive the reel in rotation about the longitudinal axis (L),
   - at least one permanent magnet synchronous motor (30) comprising a rotor (31) arranged around a first portion of the output shaft (20), the rotor (31) being integral in rotation with the input shaft (10),
   - a cycloidal reducer (50) arranged around a second portion of the output shaft (20), the cycloidal reducer (50) comprising at least one internal cam (51), an external crown (53) and at least one cycloidal disc (52) arranged between each cam (51) and the crown (53), wherein each cam (51) is mounted integral in rotation with the input shaft (10), the at least one cycloidal disc (52) is mounted integral in rotation with each cam (51), and wherein each cam (51) is eccentric, in such a way that a rotation of each cam (51) about the longitudinal axis (L) drives a rotation of the at least one cycloidal disc (52) in an eccentric and cycloidal movement, and
   - a transmission member (60) suitable for transmitting an angular displacement of the at least one cycloidal disc (52) to the output shaft (20), in such a way that an eccentric and cycloidal rotation of the at least one cycloidal disc (52) drives a rotation about the longitudinal axis (L) of the output shaft (20).

2. Device for winding/unwinding a link according to claim 1, wherein the input shaft (10) is arranged around at least one portion of the output shaft (20).

3. Device for winding/unwinding a link according to one of claims 1 or 2, further comprising a casing (40) wherein are arranged the at least one synchronous motor (30) and the cycloidal reducer (50), and wherein the output shaft (20) passes through the casing (40) from one end to the other of the casing (40).

4. Device for winding/unwinding a link according to one of claims 1 to 3, comprising between one and four synchronous motors (30) mounted in series along the first portion of the output shaft (20).

5. Device for winding/unwinding a link according to one of claims 1 to 4, wherein the at least one synchronous motor (30) is an axial flux permanent magnet synchronous motor.

6. Device for winding/unwinding a link according to one of claims 1 to 5, wherein the at least one cam (51) and the input shaft (10) are formed from a single piece, and wherein each cam (51) comprises an external face having a radial dimension that varies according to the angular position about the longitudinal axis (L), when each cam (51) is mounted in the winding/unwinding device.

7. Device for winding/unwinding a link according to one of claims 1 to 6, wherein the transmission member (60) comprises a first portion (61) and a second substantially radial portion (62) adapted to connect the first portion (61) with the output shaft (20), the transmission member (60) being arranged in such a way that an eccentric and cycloidal rotation of the at least one cycloidal disc (52) drives a rotation about the longitudinal axis (L) of the first portion (61) of the transmission member (60).

8. Device for winding/unwinding a link according to claim 7, wherein the at least one cycloidal disc (52) comprises at least one longitudinal bore, and wherein the first portion (61) of the transmission member (60) forms at least one longitudinal finger suitable for extending in the at least one longitudinal bore of the at least one cycloidal disc (52), in such a way as to transmit the angular displacement of the at least one cycloidal disc (52) to the first portion (61) of the transmission member (60).

9. Device for winding/unwinding a link according to claim 8, wherein the cycloidal reducer (50) comprises two substantially identical cycloidal discs (523, 524) and mounted in series along the longitudinal axis (L), the two cycloidal discs (523, 524) being placed in opposite eccentricity in the cycloidal reducer (50), wherein each cycloidal disc (523, 524) comprises at least one longitudinal bore, the longitudinal bores of the two cycloidal discs (523, 524) being arranged facing one another in such a way as to form at least one pair of longitudinal bores when the cycloidal discs (523, 524) are mounted in the winding/unwinding device, the at least one finger (61) of the transmission member (60) extending in the at least one pair of longitudinal bores of the two cycloidal discs (523, 524).

10. Device for winding/unwinding a link according to claim 7, wherein the cycloidal reducer (50) comprises a first cycloidal disc (521) and a second cycloidal disc (522), the first cycloidal disc (521) being mounted integral in rotation with the at least one cam (51), the second cycloidal disc (522) being mounted integral in rotation with the first cycloidal disc (521), wherein the first portion (61) of the transmission member (60) comprises an internal toothing arranged outside the second cycloidal disc (522) and adapted to cooperate with an external cycloidal toothing of the second cycloidal disc (522) in such a way that an eccentric rotation of the second cycloidal disc (522) drives a rotation about the longitudinal axis (L) of the first portion (61) of the transmission member (60).

11. Device for winding/unwinding a link according to claim 10, wherein the first portion (61) of the transmission member (60) comprises a rigid frame and an assembly of substantially cylindrical shafts, the rigid frame comprising an assembly of substantially cylindrical bores circumferentially distributed about the longitudinal axis (L), wherein each shaft of the assembly of shafts is inserted into a respective bore of the assembly of bores of the frame of the first portion (61) of the transmission member (60), in such a way as to form the internal toothing of the first portion (61) of the transmission member (60).

12. Winder of a link, the winder comprising a reel, a winding/unwinding device according to one of claims 1 to 11, a rotating joint, and a control device, wherein the control device is adapted to control the synchronous motor (30), in such a way that the control device and the winding/unwinding device provide a suitable winding/unwinding torque.

Fig. 1

**FIG. 1**

Fig. 2a

**FIG. 2a**

Fig. 2b

FIG. 2b

Fig. 3

FIG. 3

Fig. 4

FIG. 4

Fig. 5a

**FIG. 5a**

Fig. 5b

FIG. 5b

**RÉFÉRENCES CITÉES DANS LA DESCRIPTION**

**Documents brevets cités dans la description**

- FR 2335754
- FR 2607333 A1
- FR 2899399 A1
- JP 2006300273 A
- DE 10350040